# EUROPEAN PATENT APPLICATION

(11) **EP 0 717 228 A1**
(43) Date of publication of application: **19.06.1996**
(21) Application number: 95308061.1
(22) Date of filing: 10.11.1995
(51) Int. Cl.: F16L 55/10

(54) **Fluid conveying assemblies which occlude in response to fire**

(30) Priority: 13.12.1994 GB 9425154
(71) Applicant: DRAFTEX INDUSTRIES LIMITED, Edinburgh EH3 6YY, Scotland (GB)
(72) Inventor: Ausias, Gilles, F-44470 Carquefou (FR); Lallement, Serge, F-44240 La Chapelle Sur Erdre (FR)
(74) Representative: Foster, David Martyn

(57) **Abstract**

A fluid conveying assembly (10) is described comprising a pipe (12) for conveying the fluid and a heat-sensitive member (18) associated with the pipe. The member (18) has the property of so changing its dimensions on exposure to temperatures associated with the presence of fire as to close the pipe (12). The member (18) may be itself partly enclosed in a fire-resistant sheath (20).

## Description

The invention relates to a fluid conveying assembly, comprising a pipe for conveying a fluid, and a heat-sensitive member associated with the pipe, the member having the property of undergoing such dimension modification on exposure to temperatures associated with the presence of fire as to close the pipe.

Such assemblies are known, for example, from US-A-4 143 670, US-A-4 143 671 and GB-A-1 392 412. In such assemblies, the heat-sensitive member is responsive to the temperature of a fluid carried by the pipe.

According to the invention, the known assembly is characterised in that the member is positioned to be exposed to externally applied said temperatures.

One such application for an assembly according to the invention arises in motor vehicle construction. Currently, motor vehicles make use of at least one fuel pipe for conveying fuel from the fuel tank to the engine and which may be constructed from a thermoplastic material. Examples of thermoplastic materials commonly used for this purpose include polyamides. The fuel pipe or pipes often pass underneath the vehicle and may be for the most part exposed. If high temperature arises under the vehicle, the fuel pipe or pipes may melt, allowing the fuel from the fuel tank to escape and create or feed a fire. The invention is concerned with this problem.

Fluid conveying assemblies embodying the invention, in particular pipe assemblies for conveying fuel, will now be described, by way of example, making reference to the accompanying diagrammatic drawings, in which:
Figure 1 is a schematic representation of a fuel pipe assembly extending between a fuel tank and an engine;
Figure 2 is a schematic perspective view of an end region of the fuel pipe assembly of Figure 1; and
Figure 3 is a schematic cross-sectional representation of part of the fuel pipe assembly of Figure 1 after brief exposure to a fire.

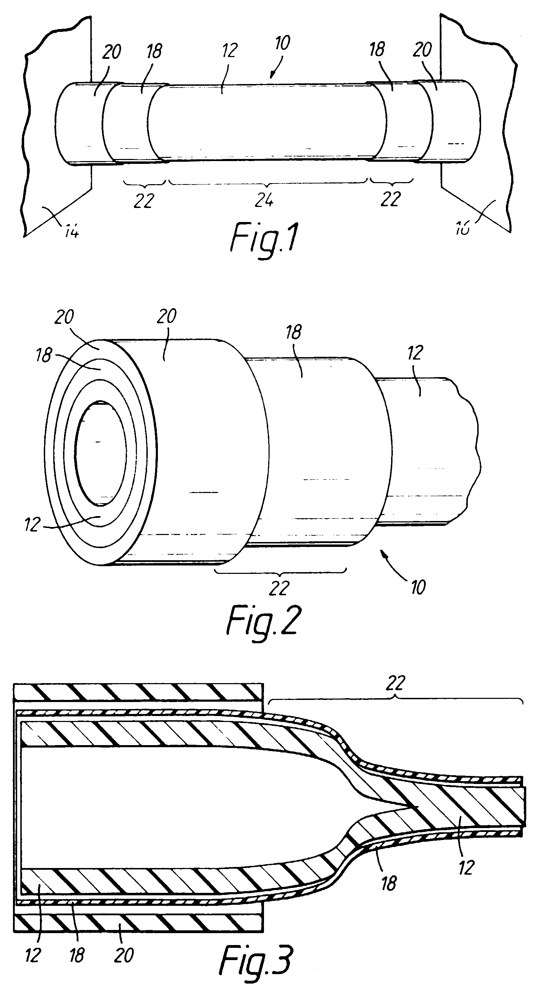

As indicated in Figure 1, the fuel pipe assembly 10 includes a fuel pipe 12 which runs between the fuel tank 14 and the engine 16 of a motor vehicle. Each end portion of the pipe 12, situated immediately adjacent to the tank 14 or the engine 16 as appropriate, is covered by a respective heat-sensitive sheath 18. Each heat-sensitive sheath 18 is, in turn, partly sheathed by an associated fire-resistant sheath 20. Each fire-resistant sheath 20 extends around a portion of the corresponding heat-sensitive sheath 18 situated immediately adjacent either the fuel tank 14 or the engine 16 as the case may be. The arrangement of one of the heat-sensitive sheaths 18 and the corresponding one of the fire-resistant sheaths 20 at one end of the pipe 12 is shown in Figure 2 (either the tank end or the engine end).

The pipe 12 is constructed from a thermoplastic material which remains sufficiently rigid, over the range of temperatures within which the assembly 10 will be used to convey fuel, to resist distortion of the pipe in use, but which softens on exposure to temperatures associated with exposure to fire. The thermoplastic material may be of a kind which becomes sticky on softening. The pipe 12 is also chemically resistant to the fuel which it is to convey. Suitable materials for a pipe 12 for use with petrol (gasoline) are polyamides.

The heat-sensitive sheaths 18 are constructed from a material which, on exposure to fire, changes its dimensions by contracting on attainment of temperatures associated with the presence of fire. However, the material undergoes little or no contraction in response to changes in temperature over the range of temperatures within which the assembly 10 will be used to convey fuel. Additionally, the heat-conductive properties of the material and the thicknesses of the heat-sensitive sheaths 18 are such that, on exposure to fire, no part of either sheath 18 undergoes significant contraction before the immediately underlying portion of the pipe 12 has undergone a significant degree of softening but each sheath 18 must thereafter contract in the manner to be explained in more detail below. The material is relatively resistant to combustion and also should preferably either not melt or have a very high melting point. A suitable material for the heat-sensitive sheath 18 is flexible polyolefine material sold under the trade mark SFM by Hellermann of 78117 Chateaufort, France, which contracts at temperatures in excess of 120°C, or polyolefine material sold by that company under the trade marks PPM and PPM-A which contracts at temperatures in excess of 130°C.

The fire-resistant sheath 20 may be constructed from any fire resistant material (such as rubber for example) which substantially retains its shape at temperatures associated with the presence of fire. Preferably, the material is an effective heat insulator.

The operation of the fuel pipe assembly 10 is described below making reference to Figures 1 to 3.

In normal usage, fuel is conveyed through the internal space of the pipe 12 in the manner of a conventional fuel pipe.

However, on exposure to fire, those sections 22 of the heat-sensitive sheaths 18 which are not covered by the fire-resistant sheaths 20 rapidly reach a temperature at which the sheath 18 material contracts and the sections 22 undergo a reduction in diameter. By this time, those portions of the pipe 12 directly underlying the sections 22 of the heat-sensitive sheaths 18 have already undergone considerable softening. Thus, contraction of the sections 22 causes mechanical constriction of the underlying portions of the pipe 12 as shown in Figure 3. On closure of the internal space of the pipe 12, the wall of the pipe 12 fuses together thereby sealing the pipe 12.

The portions of the heat-sensitive sheaths 18 which are covered by the fire resistant sheaths 20 also undergo contraction, and the regions of the pipe 12 directly underlying these portions are consequently sealed in a similar manner to that described above. However, the insulation provided by the fire-resistant sheaths 20 may delay this process.

Subsequently, on continued exposure to fire, the unsheathed central section 24 of the pipe 12 may break down completely, allowing the small amount of fuel present in this section 24 to escape. However, the sealing of the pipe 12, as described above, on either side of the central section 24 will prevent the much larger amounts of fuel available in the fuel tank and to a lesser extent in the engine from escaping - complete break-down of the sealed regions of the pipe 12 being delayed by the protection afforded by the heat sensitive sheaths 18.

It is possible that further exposure to fire will eventually break down the sealed regions of the pipe 12 underlying the unprotected sections 22 of the heat-sensitive sheath 18. However, the fire-resistant sheaths 20 serve to prolong the period during which escape of fuel from the fuel tank 14 and the engine 16 is prevented by protecting the sealed regions of the pipe 12 which underly the fire-resistant sheaths 20.

It will be appreciated that fluid conveying assemblies embodying the invention may differ from those described above. For example, the fire-resistant sheath 20 of the fuel pipe assembly 10 is optional.

The heat-sensitive sheath 18 may extend the full length of the pipe 12. Alternatively, a heat-responsive ring or clip extending around the pipe 12 may be used in place of the heat-sensitive sheath 18. In this case, the ring or clip would contract or change shape to compress the pipe 12 on exposure to a fire.

Instead of constructing the heat-sensitive sheath 18 from a material which contracts in response to heat, a shape memory retaining metal alloy could be used. Such alloys have the property that members constructed from the alloy tend to return to a predetermined shape if they are heated to temperatures above a certain value. Thus, the predetermined shape could be in the form of a cylinder one end of which is tapered radially inwardly to form a substantially closed-off end. In other words, this would be the shape to which the sheath 18 would return when heated above the critical value of temperature. In normal use, the sheath 18 would be of regular cylindrical shape (as shown in Figure 2). When heated above the critical temperature, it would return to the predetermined shape indicated above and would thus close off the pipe 12.

Alternatively, the fluid conveying assemblies described may be used for conveying a fluid other than a fuel. For example, it may be desirable to use pipe assemblies which occlude in response to fire for conveying toxic but non-flammable fluids.

In a modification, the pipes described could be arranged so that the heat-sensitive member 18 is part of the pipe through which the fluid flows (instead of being positioned to extend around the outside of the pipe). Again, the member would undergo contraction of the kind described above on attainment of temperatures associated with the presence of fire.

## Claims

1. A fluid conveying assembly, comprising a pipe (12) for conveying a fluid, and a heat-sensitive member (18) associated with the pipe, the member (18) having the property of undergoing such dimension modification on exposure to temperatures associated with the presence of fire as to close the pipe, characterised in that the member (18) is positioned to be exposed to externally applied said temperatures.

2. An assembly according to claim 1, characterised in that the member (18) extends around the pipe (12), and in that the dimension modification causes compression of the pipe (12).

3. An assembly according to claim 2, characterised in that the member (18) is in the form of a sheath.

4. An assembly according to claim 1, characterised in that the member (18) is connected to the pipe (12) and defines a portion of a flowpath for fluid through the assembly.

5. An assembly according to any one of claims 1 to 4, characterised in that the dimension modification comprises contraction of the member (18).

6. An assembly according to any one of claims 1 to 4, characterised in that the member is constructed from heat-responsive memory-retaining material which an exposure to the said temperature returns to a predetermined shape in which it produces the said dimension modification.

7. An assembly according to any preceding claim, characterised in that the pipe (12) is constructed from a thermoplastic material.

8. An assembly according to claim 7, characterised in that the dimension modification of the member (18) causes the wall of the pipe (12) to fuse, thereby sealing the pipe (12).

9. An assembly according to any preceding claim, characterised in that the member (18) is at least partly surrounded by a sheath (20) which substantially retains its shape on exposure to fire.
